# EUROPEAN PATENT SPECIFICATION

(11) **EP 4 328 010 B1**
(45) Date of publication and mention of the grant of the patent: **13.08.2025**
(21) Application number: 22858814.1
(22) Date of filing: 22.08.2022
(51) Int. Cl.: B29C 65/00, H01M 50/105, B29C 53/36, H01M 10/04, B29C 65/18, B29C 65/20, B29C 65/30

(54) **POUCH-TYPE BATTERY CELL, AND APPARATUS FOR BENDING POUCH WING OF POUCH-TYPE BATTERY CELL**
BEUTELARTIGE BATTERIEZELLE UND VORRICHTUNG ZUM BIEGEN DES BEUTELFLÜGELS EINER BEUTELARTIGEN BATTERIEZELLE
ÉLÉMENT DE BATTERIE DE TYPE POCHE, ET APPAREIL DE PLIAGE D'AILE DE POCHE D'ÉLÉMENT DE BATTERIE DE TYPE POCHE

(30) Priority: 20.08.2021 KR 20210109811
(43) Date of publication of application: 28.02.2024
(73) Proprietor: LG Energy Solution, Ltd., Seoul 07335 (KR)
(72) Inventor: NOH, So Yeon, Daejeon 34122 (KR); PARK, Ji Soo, Daejeon 34122 (KR); KIM, Ju Hyung, Daejeon 34122 (KR); KANG, Tae Won, Daejeon 34122 (KR); PARK, Dong Hyeuk, Daejeon 34122 (KR); KIM, Yong Nam, Daejeon 34122 (KR)
(74) Representative: Plasseraud IP
(86) International application number: PCT/KR2022/012473
(87) International publication number: WO 2023/022577

(56) References cited:
- WO-A1-2005/036674
- KR-A- 20030 093 362
- KR-A- 20200 059 392
- KR-A- 20200 059 392
- KR-A- 20210 038 333
- KR-A- 20210 038 333
- KR-B1- 101 766 966
- US-A1- 2020 111 999

## Description

### Technical Field

The present invention relates to a device for bending a pouch wing in a battery cell, and a method for bending a pouch wing in the battery cell, and specifically, relates to a pouch-type battery cell capable of improving insulation resistance performance of the battery cell by bending a pouch wing while heat-treating a sealing part of the pouch wing in the battery cell, thereby preventing and removing cracks in the sealing part, a device for bending a pouch wing in the battery cell.

This application claims the benefit of priority based on Korean Patent Application No. 10-2021-0109811 dated August 20, 2021.

### Background Art

A secondary battery is usually referred to as a lithium secondary battery, which refers to a battery having a polymer electrolyte and generating an electric current by movement of lithium ions, where a secondary battery pouch is used as an exterior material for packaging such a secondary battery.

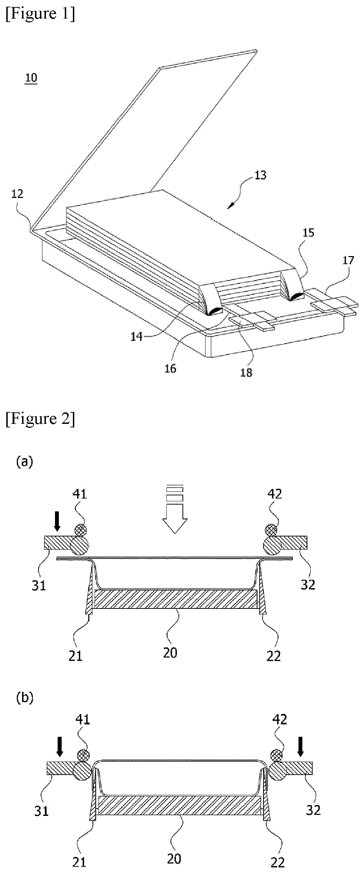

In Figure 1, a general structure of a pouch-type secondary battery is schematically illustrated as an exploded perspective diagram.

Referring to Figure 1, the pouch-type secondary battery (10) is configured to comprise an electrode assembly (13), electrode tabs (14, 15) extending from the electrode assembly (13), electrode leads welded to the electrode tabs (14, 15), and a secondary battery pouch (12) for accommodating the electrode assembly (13).

The electrode assembly (13) is a power generating element in which positive electrodes and negative electrodes are sequentially laminated in a state where separators are interposed therebetween, which has consisted of a stack-type or stack/folding-type structure. The electrode tabs (14, 15) extend from each electrode plate of the electrode assembly (13).

The electrode leads (16, 17) are electrically connected to a plurality of electrode tabs (14, 15) extending from each electrode plate, for example, by welding, where a portion is exposed to the outside of the secondary battery pouch (12). In addition, for increasing a sealing degree with the secondar batter pouch (12) and simultaneously securing an electrical insulation state, an insulating film (18) is attached to a portion of the upper and lower surfaces of the electrode leads (16, 17).

The secondary battery pouch (12) is made of an aluminum laminate sheet, provides a space for accommodating the electrode assembly (13), and has a pouch shape as a whole.

The secondary battery pouch protects the battery cell composed of the electrode assembly and the electrolyte introduced therein by a subsequent process, and is configured in a form in which an aluminum thin film is interposed for supplementation of electrochemical properties of the battery cell and improvement of heat dissipation, and the like.

In order to protect the battery cell from external impact, a functional polymer film such as a polyethylene terephthalate (PET) resin, polyethylene naphthalate (PEN), a nylon resin, or a liquid crystal polymer resin (LCP) forms the outer layer in the aluminum thin film.

In the pouch, the upper pouch and the lower pouch are joined by thermal fusion or the like on the outer peripheral surface, where an adhesive layer by polyolefin such as polyethylene (PE), unstretched polypropylene (casted polypropylene, cPP) or polypropylene (PP), or a copolymer thereof is formed between the lower surface of the upper pouch and the upper surface of the lower pouch for mutual adhesion.

Such a pouch-type battery is subjected to a step of accommodating an electrode assembly in a laminate sheet, injecting an electrolyte, and sealing it by thermal fusion or the like, and is subjected to a process of accommodating an outer peripheral surface or a thermal fusion portion (sealing part) of a battery cell in a bending device, and then pressurizing the sealing part to be bent in order that it is vertically bent to be in close contact with a sidewall of the receiving part.

However, when the sealing part is vertically bent with a bending device, the bent portion is restored over time, resulting in a defect in the battery cell dimensional design, so that there is a problem that the operation must be repeated again.

Korean Laid-Open Patent Publication No. 10-2015-0035123 relates to a battery cell bending device comprising a heating member. A method of bending an outer peripheral surface of a battery cell using the battery cell bending device according to the prior art will be briefly described as follows.

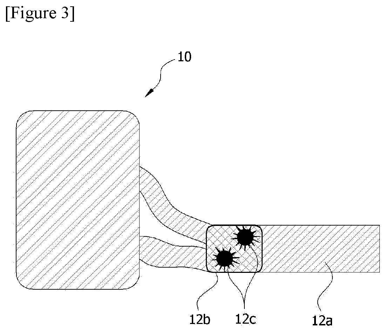

Figure 2 is sequence diagrams for explaining a bending method for bending a pouch wing in a battery cell according to the prior art, and Figure 3 illustrates the state of the sealing part after bending the pouch wing, according to the prior art.

As shown in Figure 2, a battery cell is placed on a battery cell bending device and an outer peripheral surface of the battery cell is bent. In the battery cell (10), the pouch wing (12a) is formed in the outer peripheral surface direction of the receiving part during the thermal fusion process, where this process is a process of bending the pouch wing (12a).

The battery cell (10) is mounted on a base plate (20) formed in the battery cell bending device so that the bent portion of the pouch wing (12a) is fixed by bending guides (21, 22), and pressure rollers (31, 32) move downward to bend the pouch wing (12a) vertically downward.

At this time, the pouch wing (12a) of the battery cell (10) is bent and simultaneously the pouch wing (12a) is heated by heating members (41, 42) mounted on the adjacent portions of the pressure rollers (31, 32) to be in close contact with the sidewall of the battery cell.

The battery cell bending device comprising a heating member of Korean Laid-Open Patent Publication No. 10-2015-0035123 vertically bends the outer peripheral surface of the battery cell to be in close contact with the sidewall of the receiving part using the heating member, whereby the problem of defects occurring in the design of the battery cell dimensions, which may occur due to restoration of the bent portion over time, has been solved.

In the above method, heat is not sufficiently supplied to the sealing region of the battery cell, because the sidewall of the battery cell is not heated, so that a portion where the sealing part is not melted occurs. For this reason, microcracks are generated in bundles in the sealing part of the pouch wing, whereby there is a risk that insulation defects occur.

Insulation resistance indicates the degree of insulation between the aluminum pouch and the cell in the cell pouch. As shown in Figure 3, insulation defects occur due to energization between the aluminum pouch and the cell because of bundles of microcracks (12c) in the sealing part (12b) of the pouch wing. Here, the sealing part (12b) refers to a region to which the pouch wing is attached with a weak adhesive force before sealing.

If many battery cells with poor insulation resistance are discharged, the facility fixedness is expected due to sensing of the full discharge sensor, and as a result, there are concerns about production loss. Here, when the battery cells do not meet the specifications presented by the facility during the manufacturing of the battery cells, they are determined to be defective and discharged, where the alarm and facility fixedness occur by the full discharge sensor, if the discharge spout is filled due to the discharged defective cells.

Meanwhile, when the sealing part of the pouch wing in the battery cell is fixed with a tape and adjoined to the electrode assembly side, the overall width difference between the taped portion and the non-taped portion inevitably occurs, so that process loss occurs. KR 2021 0038333 discloses a folding apparatus for pouch case of battery cell. KR 2020 0059392 discloses a pouch side processing apparatus.

### Disclosure

### Technical Problem

The present invention is intended to provide a pouch-type battery cell capable of improving the insulation resistance performance of the battery cell by bending a pouch wing, while heat-treating a sealing part in the pouch wing of the battery cell, to prevent and remove cracks in the sealing part and a device for bending a pouch wing in the battery cell.

### Technical Solution

In order to solve the above-described problem, according to one aspect of the present invention, a device for bending a pouch wing in a battery cell is provided, as defined in independent claim 1. Preferred embodiments are defined in the dependent claims.

Also, the size of the bending angle of the pouch wing upon the primary pressurization of the pouch wing by the bending part may be greater than the size of the bending angle upon the secondary pressurization.

In addition, the bending part may be a heating block provided to supply heat to the pouch wing.

Furthermore, the bending processing part may be provided to be in surface contact with the pouch wing when the pouch wing is pressurized.

According to the present invention, the bending part has a first contact surface contacting the first surface of the pouch wing at the initial position for the primary pressurization, and a second contact surface inclined at an acute angle with respect to the first contact surface, and contacting the first surface of the pouch wing upon the secondary pressurization.

In addition, the bending part may have a curved part curved to a predetermined curvature to connect the first contact surface with the second contact surface.

Furthermore, when the bending part is moved along the first direction in a state where the first contact surface is in contact with the first surface of the pouch wing, it may be provided so that the first contact surface, the curved part and the second contact surface sequentially contact the first surface of the pouch wing.

Also, the bending part may be provided so that the second contact surface is inclined within a range of 55 degrees to 85 degrees with respect to the first contact surface.

In addition, the pair of heating blades may comprise a first heating blade in contact with the first surface of the pouch wing and a second heating blade in contact with a second surface in the opposite direction to the first surface of the pouch wing.

Furthermore, the bending part may be provided so that upon the secondary pressurization, the second contact surface moves toward the second heating blade, and the pouch wing contacts the second heating blade and the second contact surface, respectively.

Also, the first and second heating blades may each comprise a main body in contact with the pouch wing and a heat source for providing heat to the main body.

In addition, the second heating blade may be bent in a direction where the contact end of the main body in contact with the pouch wing faces the bending part.

Furthermore, the second heating blade may be bent so that one side of the contact end is parallel to the second contact surface of the bending part.

Also, after the secondary pressurization of the bending part is completed, the second heating blade may be provided so that it is moved in a direction away from the pouch wing, and one side of the contact end of the second heating blade thirdly pressurizes the pouch wing.

In addition, after the secondary pressurization of the bending part is completed, the second heating blade may be provided so that it is moved in the opposite direction to the direction moving to contact the pouch wing.

Furthermore, as the second heating blade is moved in a direction away from the pouch wing, and pressurizes the pouch wing in the opposite direction to the second direction, the pouch wing may be thirdly bent.

### Advantageous Effects

As discussed above, the pouch-type battery cell, the device for bending a pouch wing in the battery cell, and the method for bending a pouch wing in the battery cell related to at least one example of the present invention have the following function effects.

The present invention can prevent and remove cracks in a sealing part upon a bending process for a pouch wing by melting the sealing part of the pouch wing through a pair of heating blades. Accordingly, the present invention can improve the insulation resistance performance of the battery cell by preventing insulation resistance defects due to cracks in the sealing part.

The present invention can prevent a pouch wing from being opened 90 degrees or more, as it is provided with an inverted trapezoidal block structure of the bending part and a structure in which the bending part and the upper heating blade are engaged to push the pouch wing toward the upper heating blade obliquely at a predetermined angle upon the bending of the pouch wing, and the pouch wing is subjected to plastic deformation while it is further bent inward. Accordingly, the present invention can continuously maintain the 90-degree bent state of the pouch wing by preventing a spring back phenomenon of the pouch wing.

Then, in comparison with the conventional roller-type structure, the bending part has a block-type structure, which can bend the pouch wing while being in surface contact with the pouch wing, whereby the contact area of the bending part with the pouch wing is widened, so that the present invention can bend the pouch wing more stably as compared with the prior art.

As a curved part is provided in the bending part, the present invention can minimize friction against the pouch wing, as a conventional pressurization roller pushes up the pouch wing, and push up the pouch wing without damage to the pouch wing so that the pouch wing is bent at a predetermined angle.

Due to the structural features as above, the present invention can improve the insulation resistance performance twice or more as compared to bending the pouch wing in the conventional roller type.

### Description of Drawings

Figure 1 is an exploded perspective diagram of a general structure of a pouch-type battery.
Figure 2 is sequence diagrams for explaining a bending method for bending a pouch wing in a battery cell according to the prior art.
Figure 3 illustrates the state of the sealing part after bending the pouch wing, according to the prior art.
Figure 4 schematically illustrates a configuration diagram of a device for bending a pouch wing in a battery cell according to one example of the present invention.
Figure 5 schematically illustrates a cross-sectional diagram of a bending part according to one example of the present invention.
Figures 6 to 10 are diagrams for explaining a process of bending a pouch wing in a battery cell using a device for bending a pouch wing in a battery cell according to one example of the present invention.
Figure 11 illustrates the state of the sealing part after bending the pouch wing, according to one example of the present invention.
Figure 12 is a diagram showing a pouch wing of a pouch-type battery cell according to one example of the present invention.

### Mode for Invention

Hereinafter, with reference to the accompanying drawings, a pouch-type battery cell and a device for bending a pouch wing in the battery cell according to a preferred example of the present invention will be described.

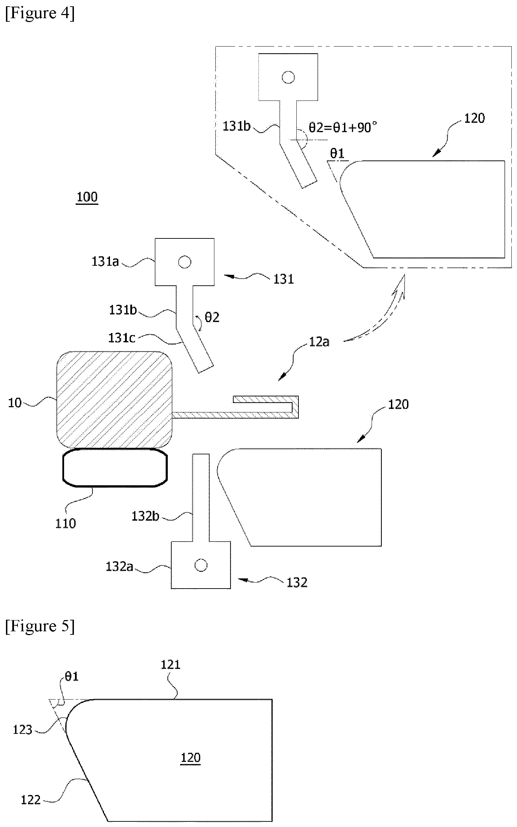

Figure 4 is a configuration diagram of a device for bending a pouch wing in a battery cell according to one example of the present invention, and Figure 5 is a schematic cross-sectional diagram of a bending part according to one example of the present invention.

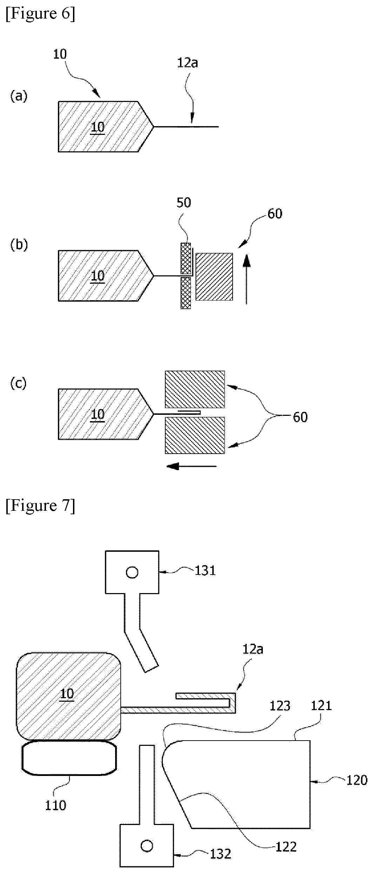

Figures 6 to 10 are diagrams for explaining a process of bending a pouch wing in a battery cell using a device for bending a pouch wing in a battery cell according to one example of the present invention.

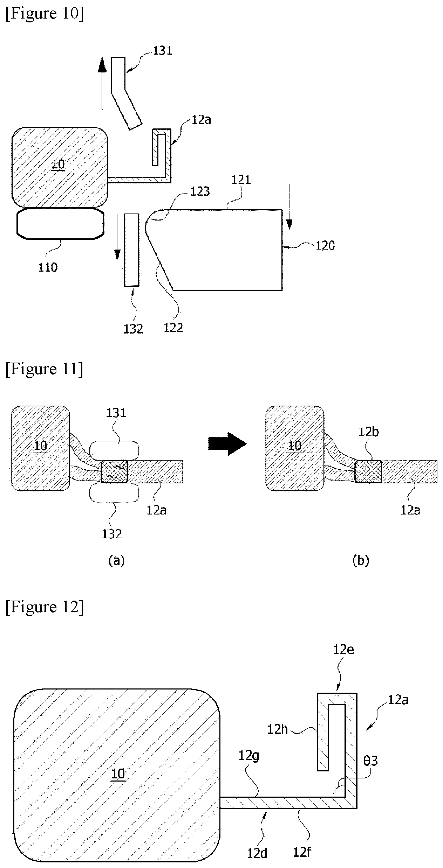

In addition, Figure 11 illustrates the state of the sealing part after bending the pouch wing, according to one example of the present invention, and Figure 12 is a diagram showing a pouch wing of a pouch-type battery cell according to one example of the present invention.

As described through Figure1, the pouch-type battery cell (10) comprises an electrode assembly (13) and a pouch (12) accommodating the electrode assembly (13).

The pouch (12) comprises a pouch wing (12a) sealed on the outside of the electrode assembly (13). In addition, referring to Figure 12, the pouch wing (12a) is bent multiple times to comprise an overlapped portion (12e) and a non-overlapped portion (12d), and in a state where no external force is applied, the overlapped portion (12e) forms a constant angle (θ3) in a range of 75 degrees to 90 degrees with respect to the non-overlapped portion (12d).

The sealed pouch wing (12a) has three bending points along the direction toward the edge, and has an approximately "⊂" character-shaped overlapped portion (12e) on the outer side, and the pouch wing (12a) has a non-overlapped portion (12d) in a region area adjacent to the electrode assembly side.

In addition, the state where no external force is applied means that the pouch wing (12a) is not wrapped via a tape or the like.

That is, when the bending process of the pouch wing (12a) is completed through the pouch wing bending device (100) in the battery cell as described herein, the overlapped portion (12e) in the pouch wing (12a) may maintain a constant angle (θ3) in the range of 75 degrees to 90 degrees with respect to the non-overlapped portion (12d), and preferably, the overlapped portion (12e) in the pouch wing (12a) may maintain a constant angle (θ3) in the range of 80 degrees to 90 degrees with respect to the non-overlapped portion (12d).

The device (100) for bending a pouch wing in the battery cell according to one example of the present invention is a device for bending a pouch wing (12a) in the battery cell (10).

Referring to Figure 4, the pouch wing bending device (100) in the battery cell comprises a seating part (110), a bending part (120), and a pair of heating blades (131, 132).

The battery cell (10) is seated on the seating part (110) so that the pouch wing (12a) of the battery cell is exposed to the outside. Specifically, the battery cell (10) is seated on the seating part (110) so that the pouch wing (12a) is exposed laterally.

In addition, the pair of heating blades (131, 132) and the bending part (120) are installed to be spaced apart from the seating part (110) in the lateral direction of the seating part (110), respectively.

The pair of heating blades (131, 132) is disposed to face each other apart at a predetermined interval. In addition, the pair of heating blades (131, 132) are each provided movably to be in contact with the pouch wing (12a), and provided to heat the pouch wing (12a) when it is in contact with the pouch wing (12a).

The pouch wing (12a) may have a first surface (12f) and a second surface (12g) opposite to the first surface (12f). At this time, the pair of heating blades (131, 132) may comprise a first heating blade (132) in contact with the first surface (12f) of the pouch wing (12a) and a second heating blade (131) in contact with a second surface (12g) in the opposite direction to the first surface (12f) of the pouch wing.

At this time, in this document, the second heating blade (131) may be referred to as an upper heating blade, and the first heating blade (132) may be referred to as a lower heating blade, based on the arrangement relationship between the components shown in Figure 4. In addition, the pair of heating blades (131, 132) contact the non-overlapped portion (12d) of the pouch wing (12a), respectively.

The bending part (120) is provided to bend the pouch wing (12a), as the pair of heating blades (131, 132) moves along a first direction (F1), in a state where it is in contact with the pouch wing (12a), to primarily pressurize the pouch wing (12a). and moves along a second direction (F2) different from the first direction (F1) to secondarily pressurize the pouch wing (12a). The bending part (120) may be provided to bend the pouch wing (12a) twice in different directions.

The size of the bending angle of the pouch wing upon the primary pressurization of the pouch wing by the bending part (120) may be greater than the size of the bending angle upon the secondary pressurization.

The bending device (100) comprises a pair of heating blades (131, 132) and a control part (180) for controlling movement and operation (heating) of the bending part (120).

Referring to Figure 4, in the initial position before the bending process is performed, the bending part (120) is located below the first surface (12f) of the pouch wing (12a). The bending part (120) is in contact with the first surface (12f) of the pouch wing (12a) at the initial position to primarily bend the pouch wing (12a) while moving to the upper portion of the initial position. In addition, the bending part (120) is provided to supply heat to the pouch wing (12a).

The bending part (120) may be a heating block provided to supply heat to the pouch wing (12a). The bending part (120) comprises a heat source therein, wherein the heat source may be a self-heating heater rod (Cartridge Heater Pipe). In addition, one or more heater rods are included inside the bending part (120), wherein a ceramic core that forms a shape of a heater rod and simultaneously serves as a support rod, a heating coil surrounding the ceramic core, and a wire for supplying electricity to the heating coil may be included in the inside of the heater rod.

Referring to Figure 5, the bending part (120) may be provided to be in surface contact with the pouch wing (12a) upon pressurizing the pouch wing (12a). That is, the bending part (120) has a block-type structure that the surface in contact with the pouch wing (12a) is flat upon pressurization. As one example, the bending part (120) may have an approximately inverted trapezoidal cross section.

In this document, the bending part (120) has different surfaces in contact with the pouch wing (12a) upon the primary and secondary pressurization, respectively, wherein the respective contact surfaces are referred to as a first contact surface (121) and a second contact surface (122), respectively. According to the present invention, the bending part has a first contact surface (121) in contact with the first surface (12f) of the pouch wing (12a) at the initial position for the primary pressurization, and a second contact surface (122) inclined at an acute angle with respect to the first contact surface (121) and in contact with the first surface (12f) of the pouch wing (12a) upon the secondary pressurization.

The first contact surface (121) is a surface that the bending part (120) contacts the pouch wing (12a) when it is placed in the initial position and moves upward from the initial position. The second contact surface (122) is a surface that the bending part (120) contacts the pouch wing (12a) upon the secondary pressurization. The second contact surface (122) is bent and extended to a lower portion of the first contact surface (121). In particular, upon the secondary pressurization, the second contact surface (122) is in contact with the overlapped portion (12e) of the pouch wing (12a).

The second contact surface (122) is bent to be inclined at a predetermined angle with respect to the first contact surface (121). At this time, the bending part (120) may be provided to have an inclination angle (θ1) of the second contact surface (122) with respect to the first contact surface (121) within a range of 55 degrees to 85 degrees.

As such, due to the structure in which the second contact surface (122) of the bending part (120) is inclined with respect to the first contact surface (121), it can prevent the pouch wing (12a) from being opened 90 degrees or more, as the pouch wing (12a) is pushed toward the upper heating blade (131) obliquely at a predetermined angle upon the bending of the pouch wing (12a), and the pouch wing (12a) is subjected to plastic deformation while it is further bent inward (direction toward the electrode assembly). That is, by preventing the spring back phenomenon of the pouch wing (12a), the pouch wing (12a) can continuously maintain the 90-degree bent state.

In addition, the bending part (120) may have a curved part (123) curved to a predetermined curvature to connect the first contact surface (121) with the second contact surface (122). In this structure, referring to Figure 4, the inclination angle (θ1) of the second contact surface (122) with respect to the first contact surface (121) may mean an angle formed at the intersection of imaginary line segments extending from the respective contact surfaces.

In comparison with the conventional roller-type structure, the bending part (120) has a block-type structure, which can bend the pouch wing (12a) while being in surface contact with the pouch wing (12a) upon the primary and secondary pressurization. In addition, the bending part (120) has a larger contact area with respect to the pouch wing (12a) upon pressurization, so that it can bend the pouch wing (12a) stably.

In addition, the bending part (120) has a curved part (123). The curved part (123) may be formed by rounding a portion where the first contact surface (121) and the second contact surface (122) are connected.

The bending part (120) bends the pouch wing (12a) while in a state where the first contact surface (121) is in contact with the first surface (12f) of the pouch wing (12a), the pouch wing (12a) rides the curved part (123) and moves upward (first direction, F1) from the initial position to be in contact with the second contact surface (122).

At this time, the bending part (120) can minimize the friction against the pouch wing (12a) by the curved part (123), as a conventional pressure roller pushes up the pouch wing (12a), and push up the pouch wing (12a) without damage to the pouch wing (12a) so that the pouch wing (12a) is bent at a predetermined angle.

When the bending part (120) is moved along the first direction (F1) in a state where the first contact surface (121) is in contact with the first surface (12f) of the pouch wing, the first contact surface (121), the curved part (123) and the second contact surface (122) may sequentially contact the first surface (12f) of the pouch wing (12a).

Referring to Figure 4, the pair of heating blades (131, 132) is provided movably at a position facing each other so that it contacts a first surface (12f, also referred to as 'lower surface') and a first surface (12g, also referred to as 'upper surface') of the pouch wing (12a), respectively.

Meanwhile, in this example, a portion in which the pair of heating blades (131, 132) is in contact with the pouch wing (12a) may be referred to as a sealing part. Referring to Figure 11, the sealing part (12b) may be formed by applying heat through the pair of heating blades (131, 132).

The pair of heating blades (131, 132) is provided movably in a direction closer to the pouch wing (12a) and in a direction away from the pouch wing (12a). For example, the pair of heating blades (131, 132) has a structure that can be lifted up and down. The pair of heating blades (131, 132) performs a function of holding the pouch wing (12a) upon the bending process while supplying heat to the pouch wing (12a).

The present invention can prevent cracks from occurring in the sealing part (12b) upon the bending process for the pouch wing (12a) by melting the sealing part (see 12b of Figure 11) of the pouch wing (12a) through the pair of heating blades (131, 132).

The respective heating blades (131, 132) each comprise a main body (131b, 132b) in contact with the pouch wing (12a), and a heat source (131a, 132a) for providing heat to the main body (131b, 132b). The main body (131b, 132b) may extend from the heat source (131a, 132a).

The second heating blade (131) located at the upper portion comprises an upper heat source (131a) and a main body (131b, 131c) extending from the upper heat source (131a), where the main body comprises a connection end (131b) connected to the upper heat source (131a) and a contact end (131c) extending from the connection end (131b).

The first heating blade (132) located at the lower portion comprises a lower heat source (132a) and a main body (132b) extending from the lower heat source (132a), where the main body comprises a contact end for contacting the pouch wing (12a).

Here, the contact end (132b) has a structure capable of pressurizing the sealing part (12b) in contact with the pouch wing (12a). The main bodies of the heating blades (131, 132) may each have a rod shape.

Meanwhile, the second heating blade (131) located on the upper portion has a shape that the contact end (131c) of the main body corresponds to the bending part (120).

The second heating blade (131) has a shape that the contact end (131c) of the main body in contact with the pouch wing (12a) is bent in a direction toward the bending part (120). Specifically, the second heating blade (131) may be bent such that one side (131d) of the contact end (131c) is parallel to the second contact surface (122) of the bending part (120). One side (131d) of the contact end (131c) is a surface in contact with one side (12h, the surface facing the electrode assembly) of the overlapped region (12e) of the pouch wing upon the secondary pressurization through the bending part (120).

As one example, when the bending part (120) has a block structure having an inverted trapezoidal cross section, the contact end (131c) has a structure bent at a predetermined angle with respect to the connection end (131b) to correspond to the shape of the bending part (120). At this time, the inclination angle (θ2) of the contact end (131c) with respect to the connection end (131b) may be in a range of 145 degrees to 175 degrees.

The bending part (120) may be provided so that upon the secondary pressurization, the second contact surface (122) moves toward the second heating blade (131), and the pouch wing (12a) is in contact with the second heating blade (131) and the second contact surface (122), respectively. That is, upon the secondary pressurization, the overlapped region (12e) of the pouch wing is in contact with one side (131d) of the contact end (131c) of the second heating blade (131) and the second contact surface (122) of the bending part (120), respectively.

The present invention can prevent the pouch wing (12a) from being opened 90 degrees or more after the bending process is completed, as through the structures of the contact end (131c) of the second heating blade (131) and the bending part (120), and the heat application method, the upper surface and the lower surface of the pouch are subjected to plastic deformation at the same time while the overlapped region (122) is bent in a range of 55 degrees to 85 degrees with respect to the region (12d) that the pouch wing (12a) is not overlapped upon the secondary pressurization.

That is, the pouch wing (12a) can continuously maintain the 90-degree bent state by preventing the spring back phenomenon of the pouch wing (12a).

Hereinafter, a method for bending a pouch wing (12a) using a device (100) for bending a pouch wing in a battery cell (said method not being part of the present invention) will be described with reference to Figures 6 to 10.

Figure 6 is a diagram for explaining a process of bending it twice to form an overlapped portion (12e of Figure 12) in a "⊂" character shape on the edge of the pouch wing.

As shown in Figure 6(a), a battery cell (10) is prepared. At this time, the pouch wing of the battery cell (10) is in a sealed state on the upper and lower surfaces. In Figure 6(a), the shape of the pouch wing (12a) in the battery cell is referred to as an initial shape.

Next, as shown in Figure 6(b), a guide rod (50) holds the pouch wing (12a) while pressurizing the upper and lower surfaces of the pouch wing (12a). Subsequently, while a bending block (60) moves from the lower part of the pouch wing (12a) to the upper part (vertical movement), the pouch wing (12a) is primarily bent at 90 degrees with respect to the initial shape.

Subsequently, as shown in Figure 6(c), while the bending block (60) moves forward toward the battery cell (horizontal movement), the pouch wing (12a) is secondarily bent so that the end of the overlapped region is 180 degrees with respect to the initial shape.

Figures 7 to 10 are a process of further bending the pouch wing (12a) after the process described in Figure 6 is completed. Figures 7 to 10 are diagrams for explaining a process of bending the pouch wing of the battery cell using the device for bending a pouch wing in the battery cell according to one example of the present invention.

That is, in the pouch wing (12a), the process of bending the overlapped region with respect to the non-overlapped region is shown.

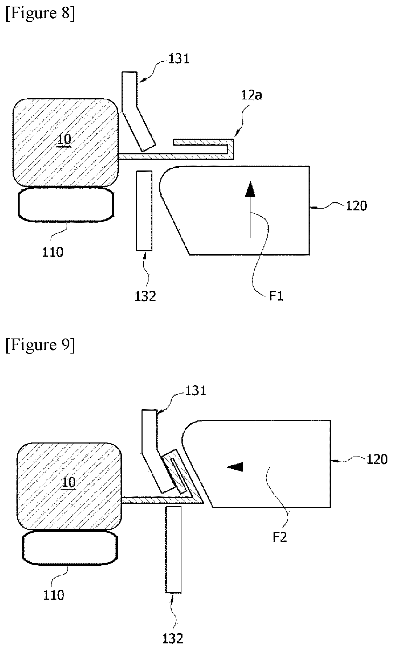

Referring to Figures 7 and 8, while the second heating blade (131) is positioned to be in contact with the upper surface of the pouch wing (12a), and the first heating blade (132) is positioned to be in contact with the lower surface of the pouch wing (12a), they hold the pouch wing (12a) up and down. At this time, the second heating blade (131) and the first heating blade (132) supply heat to the pouch wing (12a). The sealing part of the pouch wing (12a) is melted by the second heating blade (131) and the first heating blade (132) (see 12b of Figure 11).

Subsequently, referring to Figure 8, the bending part (120) moves from the initial position to the upper part (first direction, F) while being in contact with the lower surface of the pouch wing (12a).

As shown in Figure 9, the bending part (120) pressurizes the overlapped region of the pouch wing (12a) while moving to the second direction (F2) toward the upper heating blade (131). Meanwhile, the first direction (e.g., vertical direction) and the second direction (e.g., horizontal direction) may be directions orthogonal to each other.

Referring to Figure 9, upon the secondary pressurization after the primary pressurization is completed, the pouch wing (12a) is subjected to plastic deformation while the overlapped region is bent at an acute angle with respect to the non-overlapped region. Accordingly, it is possible to prevent a spring back phenomenon of the pouch wing (12a) after bending.

As one example, the temperature applied to the overlapped portion through the bending part (120) is 160 to 200°C, and the pressure is 0.2 to 0.7 MPa, where the thermal compression through the bending part (120) can be performed for 1 to 10 seconds.

When the bending process of the pouch wing (12a) according to Figure 9 is completed, the second heating blade (131), the first heating blade (132) and the bending part (120) return to their original positions, as shown in Figure 10.

Referring to Figure 10, after the secondary pressurization of the bending part (120) is completed, the second heating blade (131) is moved in a direction away from the pouch wing (12a), and provided so that one side (131d) of the contact end (131c) of the second heating blade (131) thirdly pressurizes the pouch wing (12a).

Referring to Figure 10, after the secondary pressurization of the bending part (120) is completed, the second heating blade (131) is moved from the initial position in the opposite direction to the direction moving to contact the pouch wing (12a). The second heating blade (131) is moved in a direction away from the pouch wing (12a), and pressurizes the pouch wing (12a) in the opposite direction to the second direction (F2), whereby the pouch wing (12a) can be thirdly bent.

Referring to Figures 10 and 12, through the third bending process, the overlapped portion (12e) of the pouch wing (12a) forms a constant angle (θ3) in the range of 75 degrees to 90 degrees with respect to the non-overlapped portion (12d) in a state where no external force is applied.

Hereinafter, with reference to Tables 1 and 2, the bending process efficiency will be described.

**[Table 1]**

| Classification | Insulation resistance section | Insulation resistance value before bending | Insulation resistance value after bending | Increase-decrease rate | Average increase-decrease rate |
|---|---|---|---|---|---|
| Case 1 Heating blade-Heat source supply X | 1MΩ~49MΩ | 3MΩ | 5MΩ | 67% | 317% |
| | | 5MΩ | 15MΩ | 200% | |
| | | 13MΩ | 56MQ | 331% | |
| | | 27MΩ | 208MΩ | 670% | |
| | 50MΩ~99MΩ | 55MQ | 247MQ | 349% | 534% |
| | | 71MΩ | 470MQ | 562% | |
| | | 82MΩ | 548MQ | 567% | |
| | | 88MΩ | 667MQ | 658% | |
| | 100MΩ or more | 140MΩ | 684MΩ | 389% | 186% |
| | | 210MΩ | 705MQ | 236% | |
| | | 429MQ | 720MΩ | 68% | |
| | | 505MQ | 770MΩ | 52% | |
| Case 2 Heating blade-Heat source supply O | IMQ~49MQ | 4MΩ | 10MΩ | 150% | 373% |
| | | 8MΩ | 23MΩ | 188% | |
| | | 18MΩ | 126MΩ | 600% | |
| | | 42MΩ | 275MΩ | 555% | |
| | 50MΩ~99MΩ | 51MΩ | 345MQ | 576% | 652% |
| | | 62MΩ | 512MΩ | 726% | |
| | | 78MQ | 589MΩ | 655% | |
| | | 92MΩ | 691MΩ | 651% | |
| | 100MΩ or more | 160MΩ | 680MΩ | 325% | 221% |
| | | 230MΩ | 810MΩ | 252% | |
| | | 370MQ | 1000MΩ | 170% | |
| | | 420MΩ | 1000MΩ | 138% | |

**[Table 2]**

| Insulation resistance value section | Average increase-decrease rate of Case 1 | Average increase-decrease rate of Case 2 | Improvement rate of Case 2 |
|---|---|---|---|
| 1MΩ~49MΩ | 317% | 373% | 18% |
| 50MΩ~99MΩ | 534% | 652% | 22% |
| 100MΩ or more | 186% | 221% | 19% |

Table 1 shows the improvement rate of insulation resistance values in the case where the heat source is not supplied by the heating blade (Case 1) and the case where the heat source is supplied by the heating blade (Case 2).

In Table 1 above, Case 1 is the insulation resistance improvement rate when the pouch wing (12a) is bent using the bending part (120) in a state where no heat source is supplied to the heating blades (131, 132).

Then, Case 2 shows the insulation resistance improvement rate when the pouch wing (12a) is bent using the block-type bending part (120) in a state where the heat source is supplied to the heating blades (131, 132).

In Tables 1 and 2 above, the insulation resistance section is a section set based on the block type, which is largely divided into a range of 1MΩ to 49MΩ, a range of 50MQ to 99MQ, and 100MQ or more.

In Case 1, it can be seen that in the bending part (120) having a block-type structure according to one example of the present invention, the insulation resistance value in the range of 1MΩ to 49MQ before bending is improved by an average of 317% after bending; the insulation resistance value in the range of 50MQ to 99MQ before bending is improved by an average of 534% after bending; and the insulation resistance value in the range of 100MQ before bending is improved by an average of 186% after bending.

In Case 2, it can be seen that in the bending part (120) having a block-type structure according to one example of the present invention, the insulation resistance value in the range of 1MΩ to 49MQ before bending is improved by an average of 373% after bending; the insulation resistance value in the range of 50MQ to 99MQ before bending is improved by an average of 652% after bending; and the insulation resistance value in the range of 100MQ before bending is improved by an average of 221% after bending.

Referring to Case 1 and Case 2 above, it can be seen that in the present invention, due to the block-type bending part (120), the insulation resistance is improved by at least two times compared to before and after the bending.

Table 2 summarizes the average increase-decrease rate of insulation resistance in Cases 1 and 2 of Table 1, and the insulation resistance improvement rate due to heat supply of the heating blade. Here, Cases 1 and 2 are tested under the same conditions.

Looking at the improvement rate of Case 2 with respect to Case 1 with reference to Table 2, it can be seen that in the case of supplying heat to the heating blade (Case 2), as compared with the case of supplying no heat to the heating blade (Case 1), the insulation resistance is improved as an improvement rate of 18% in the range of 1 MΩ to 49MQ, an improvement rate of 22% in the range of 50MQ to 99MQ, and an improvement rate of 19% in the range of 100MQ or more.

The scope of the present invention is indicated by the claims.

### Industrial Applicability

The present invention can prevent and remove cracks in a sealing part upon a bending process for a pouch wing by melting the sealing part of the pouch wing through a pair of heating blades. Accordingly, the present invention can improve the insulation resistance performance of the battery cell by preventing insulation resistance defects due to cracks in the sealing part.

## Claims

1. A device (100) for bending a pouch wing (12a) in a battery cell (10), said device comprising:
a seating part (110) adapted to seat the battery cell (10) thereon so that the pouch wing (12a) of the battery cell (10) is exposed to the outside;
a pair of heating blades (131, 132) disposed to face each other apart at a predetermined interval, provided movably to be in contact with the pouch wing (12a), and provided to heat the pouch wing (12a); **characterized in that**
a bending part (120) is provided to bend the pouch wing (12a) by moving along a first direction, in a state where the pair of heating blades (131, 132) is in contact with the pouch wing (12a), to primarily pressurize the pouch wing (12a), and moving along a second direction different from the first direction to secondarily pressurize the pouch wing (12a),
wherein the bending part (120) has a first contact surface (121) contacting the first surface (12f) of the pouch wing (12a) at the initial position for the primary pressurization, and
a second contact surface (122) inclined at an acute angle with respect to the first contact surface (122), and contacting the first surface (12f) of the pouch wing (12a) upon the secondary pressurization.

2. The device (100) for bending a pouch wing (12a) in a battery cell (10) according to claim 1, **characterized in that**
the size of a bending angle of the pouch wing (12a) upon the primary pressurization of the pouch wing (12a) by the bending part (120) is greater than the size of the bending angle upon the secondary pressurization.

3. The device (100) for bending a pouch wing (12a) in a battery cell (10) according to claim 1, **characterized in that**
the bending part (120) is a heating block provided to supply heat to the pouch wing (12a).

4. The device (100) for bending a pouch wing (12a) in a battery cell (10) according to claim 1, **characterized in that**
the bending part (120) has a curved part (123) curved to a predetermined curvature to connect the first contact surface (121) with the second contact surface (122).

5. The device (100) for bending a pouch wing (12a) in a battery cell (10) according to claim 4, **characterized in that**
when the bending part (120) is moved along the first direction in a state where the first contact surface (121) is in contact with the first surface (12f) of the pouch wing (12a), the first contact surface (121), the curved part (123) and the second contact surface (123) sequentially contact the first surface (121) of the pouch wing (12a).

6. The device (100) for bending a pouch wing (12a) in a battery cell (10) according to claim 1, **characterized in that**
the bending part (120) is provided so that the second contact surface (122) is inclined within a range of 55 degrees to 85 degrees with respect to the first contact surface (121).

7. The device (100) for bending a pouch wing (12a) in a battery cell (10) according to claim 1, **characterized in that**
the pair of heating blades (131, 132) comprises a first heating blade (132) in contact with the first surface (12f) of the pouch wing (12a) and a second heating blade (131) in contact with a second surface (12g) in the opposite direction to the first surface (12f) of the pouch wing (12a), and
the bending part (120) is provided so that upon the secondary pressurization, the second contact surface (12g) moves toward the second heating blade (131), and the pouch wing (12a) contacts the second heating blade (131) and the second contact surface (122), respectively.

8. The device (100) for bending a pouch wing (12a) in a battery cell (10) according to claim 7, **characterized in that**
the first and second heating blades (131, 132) each comprise a main body (131b, 132b) in contact with the pouch wing (12a) and a heat source (131a,132a) for providing heat to the main body (131b 132b), and
the second heating blade (131) is bent in a direction where the contact end of the main body (1321) in contact with the pouch wing (12a) faces the bending part (120).

9. The device (100) for bending a pouch wing (12a) in a battery cell (10) according to claim 8, **characterized in that**
the second heating blade (131) is bent so that one side of the contact end (131c) is parallel to the second contact surface (122) of the bending part (120).

10. The device (100) for bending a pouch wing (12a) in a battery cell (10) according to claim 9, **characterized in that**
after the secondary pressurization of the bending part (120) is completed, the second heating blade (131) is provided so that it is moved in a direction away from the pouch wing (12a), and one side of the contact end (131c) of the second heating blade (131) thirdly pressurizes the pouch wing.

11. The device (100) for bending a pouch wing (12a) in a battery cell (10) according to claim 10, **characterized in that**
after the secondary pressurization of the bending part (120) is completed, the second heating blade (131) is moved in the opposite direction to the direction moving to contact the pouch wing (12a).

12. The device (100) for bending a pouch wing (12a) in a battery cell (10)according to claim 10, **characterized in that**
as the second heating blade (131) is moved in a direction away from the pouch wing (12a), and pressurizes the pouch wing (12a) in the opposite direction to the second direction, the pouch wing (12a) is thirdly bent.

## Patentansprüche

1. Vorrichtung (100) zum Biegen eines Beutelflügels (12a) in einer Batteriezelle (10), die Vorrichtung umfassend:
einen Aufnahmeteil (110), welcher dazu eingerichtet ist, die Batteriezelle (10) daran aufzunehmen, so dass der Beutelflügel (12a) der Batteriezelle (10) zu der Außenseite freigelegt ist;
ein Paar von Heizklingen (131, 132), welche dazu angeordnet sind, bei einem vorbestimmten Intervall beabstandet zueinander zu weisen, welche bewegbar in Kontakt mit dem Beutelflügel (12a) bereitgestellt sind und dazu bereitgestellt sind, den Beutelflügel (12a) zu heizen;
**dadurch gekennzeichnet, dass**
ein Biegeteil (120) dazu bereitgestellt ist, den Beutelflügel (12a) zu biegen, indem er sich entlang einer ersten Richtung bewegt, in einem Zustand, in welchem das Paar von Heizklingen (131, 132) in Kontakt mit dem Beutelflügel (12a) ist, um primär den Beutelflügel (12a) unter Druck zu setzen, und sich entlang einer zweiten Richtung verschieden von der ersten Richtung zu bewegen, um den Beutelflügel (12a) sekundär unter Druck zu setzen,
wobei der Biegeteil (120) eine erste Kontaktfläche (121), welche die erste Fläche (12f) des Beutelflügels (12a) an der anfänglichen Position für das primäre unter-Druck-Setzen kontaktiert, und
eine zweite Kontaktfläche (122) aufweist, welche bei einem spitzen Winkel bezüglich der ersten Kontaktfläche (122) geneigt ist und die erste Fläche (12f) des Beutelflügels (12a) auf das sekundäre unter-Druck-Setzen hin kontaktiert.

2. Vorrichtung (100) zum Biegen eines Beutelflügels (12a) in einer Batteriezelle (10) nach Anspruch 1, **dadurch gekennzeichnet, dass**
die Größe eines Biegewinkels des Beutelflügels (12a) auf das primäre unter-Druck-Setzen des Beutelflügels (12a) durch den Biegeteil (120) hin größer als die Größe des Biegewinkels auf das sekundäre unter-Druck-Setzen hin ist.

3. Vorrichtung (100) zum Biegen eines Beutelflügels (12a) in einer Batteriezelle (10) nach Anspruch 1, **dadurch gekennzeichnet, dass**
der Biegeteil (120) ein Heizblock ist, welcher dazu bereitgestellt ist, Wärme zu dem Beutelflügel (12a) zu liefern.

4. Vorrichtung (100) zum Biegen eines Beutelflügels (12a) in einer Batteriezelle (10) nach Anspruch 1, **dadurch gekennzeichnet, dass**
der Biegeteil (120) einen gekrümmten Teil (123) aufweist, welcher auf eine vorbestimmte Krümmung gekrümmt ist, um die erste Kontaktfläche (121) mit der zweiten Kontaktfläche (122) zu verbinden.

5. Vorrichtung (100) zum Biegen eines Beutelflügels (12a) in einer Batteriezelle (10) nach Anspruch 4, **dadurch gekennzeichnet, dass**
wenn der Biegeteil (120) entlang der ersten Richtung in einem Zustand bewegt wird, in welchem die erste Kontaktfläche (121) in Kontakt mit der ersten Fläche (12f) des Beutelflügels (12a) ist, die erste Kontaktfläche (121), der gekrümmte Teil (123) und die zweite Kontaktfläche (123) sequenziell die erste Fläche (121) des Beutelflügels (12a) kontaktieren.

6. Vorrichtung (100) zum Biegen eines Beutelflügels (12a) in einer Batteriezelle (10) nach Anspruch 1, **dadurch gekennzeichnet, dass**
der Biegeteil (120) derart bereitgestellt ist, dass die zweite Kontaktfläche (122) innerhalb eines Bereichs von 55 Grad bis 85 Grad bezüglich der ersten Kontaktfläche (121) geneigt ist.

7. Vorrichtung (100) zum Biegen eines Beutelflügels (12a) in einer Batteriezelle (10) nach Anspruch 1, **dadurch gekennzeichnet, dass**
das Paar von Heizklingen (131, 132) eine erste Heizklinge (132) in Kontakt mit der ersten Fläche (12f) des Beutelflügels (12a) und eine zweite Heizklinge (131) in Kontakt mit einer zweiten Fläche (12g) in der entgegengesetzten Richtung zu der ersten Fläche (12f) des Beutelflügels (12a) umfasst, und
der Biegeteil (120) derart bereitgestellt ist, dass sich auf das sekundäre unter-Druck-Setzen hin die zweite Kontaktfläche (12g) in Richtung der zweiten Heizklinge (131) bewegt und der Beutelflügel (12a) die zweite Heizklinge (131) bzw. die zweite Kontaktfläche (122) kontaktiert.

8. Vorrichtung (100) zum Biegen eines Beutelflügels (12a) in einer Batteriezelle (10) nach Anspruch 7, **dadurch gekennzeichnet, dass**
die ersten und zweiten Heizklingen (131, 132) jeweils einen Hauptkörper (131b, 132b) in Kontakt mit dem Beutelflügel (12a) und eine Heizquelle (131a, 132b) zum Bereitstellen von Wärme zu dem Hauptkörper (131b, 132b) umfassen, und
die zweite Heizklinge (131) in eine Richtung gebogen ist, in welcher das Kontaktende des Hauptkörpers (1321) in Kontakt mit dem Beutelflügel (12a) zu dem Biegeteil (120) weist.

9. Vorrichtung (100) zum Biegen eines Beutelflügels (12a) in einer Batteriezelle (10) nach Anspruch 8, **dadurch gekennzeichnet, dass**
die zweite Heizklinge (131) derart gebogen ist, dass eine Seite des Kontaktendes (131c) parallel zu der zweiten Kontaktfläche (122) des Biegeteils (120) ist.

10. Vorrichtung (100) zum Biegen eines Beutelflügels (12a) in einer Batteriezelle (10) nach Anspruch 9, **dadurch gekennzeichnet, dass**
nachdem das sekundäre unter-Druck-Setzen des Biegeteils (120) abgeschlossen ist, die zweite Heizplatte (131) derart bereitgestellt ist, dass sie in eine Richtung weg von dem Beutelflügel (12a) bewegt wird, und eine Seite des Kontaktendes (131c) der zweiten Heizklinge (131) als drittes den Beutelflügel unter Druck setzt.

11. Vorrichtung (100) zum Biegen eines Beutelflügels (12a) in einer Batteriezelle (10) nach Anspruch 10, **dadurch gekennzeichnet, dass**
nachdem das sekundäre unter-Druck-Setzen des Biegeteils (120) abgeschlossen ist, die zweite Heizklinge (131) in die entgegengesetzte Richtung zu der Richtung bewegt wird, in welche sie sich zum Kontaktieren des Beutelflügels (12a) bewegt.

12. Vorrichtung (100) zum Biegen eines Beutelflügels (12a) in einer Batteriezelle (10) nach Anspruch 10, **dadurch gekennzeichnet, dass**
wenn die zweite Heizklinge (131) in eine Richtung weg von dem Beutelflügel (12a) bewegt wird und den Beutelflügel (12a) in die entgegengesetzte Richtung zu der zweiten Richtung unter Druck setzt, der Beutelflügel (12a) als drittes gebogen wird.

## Revendications

1. Dispositif (100) pour plier une aile de poche (12a) dans un élément de batterie (10), ledit dispositif comprenant :
une partie de placement (110) adaptée pour placer l'élément de batterie (10) sur celle-ci de façon à ce que l'aile de poche (12a) de l'élément de batterie (10) soit exposée vers l'extérieur ;
une paire de lames chauffantes (131, 132) disposées pour se faire face l'une l'autre à un intervalle prédéterminé, fournies de manière mobile pour être en contact avec l'aile de poche (12a), et fournies pour chauffer l'aile de poche (12a) ; **caractérisé en ce que** une partie de pliage (120) est fournie pour plier l'aile de poche (12a) en se déplaçant le long d'une première direction, dans un état où la paire de lames chauffantes (131, 132) est en contact avec l'aile de poche (12a), pour mettre sous pression une première fois l'aile de poche (12a), et en se déplaçant le long d'une seconde direction différente de la première direction pour mettre sous pression une deuxième fois l'aile de poche (12a),
dans lequel la partie de pliage (120) a une première surface de contact (121) entrant en contact avec la première surface (12f) de l'aile de poche (12a) au niveau de la position initiale pour la première mise sous pression, et
une seconde surface de contact (122) inclinée à un angle aigu par rapport à la première surface de contact (122), et entrant en contact avec la première surface (12f) de l'aile de poche (12a) lors de la deuxième mise sous pression.

2. Dispositif (100) pour plier une aile de poche (12a) dans un élément de batterie (10) selon la revendication 1, **caractérisé en ce que**
la taille d'un angle de pliage de l'aile de poche (12a) lors de la première mise sous pression de l'aile de poche (12a) par la partie de pliage (120) est plus grande que la taille de l'angle de pliage lors de la deuxième mise sous pression.

3. Dispositif (100) pour plier une aile de poche (12a) dans un élément de batterie (10) selon la revendication 1, **caractérisé en ce que**
la partie de pliage (120) est un bloc chauffant fourni pour délivrer de la chaleur à l'aile de poche (12a).

4. Dispositif (100) pour plier une aile de poche (12a) dans un élément de batterie (10) selon la revendication 1, **caractérisé en ce que**
la partie de pliage (120) a une partie courbée (123) courbée jusqu'à une courbure prédéterminée pour relier la première surface de contact (121) à la seconde surface de contact (122).

5. Dispositif (100) pour plier une aile de poche (12a) dans un élément de batterie (10) selon la revendication 4, **caractérisé en ce que**
lorsque la partie de pliage (120) est déplacée le long de la première direction dans un état où la première surface de contact (121) est en contact avec la première surface (12f) de l'aile de poche (12a), la première surface de contact (121), la partie courbée (123) et la seconde surface de contact (123) entrent en contact de manière séquentielle avec la première surface (121) de l'aile de poche (12a).

6. Dispositif (100) pour plier une aile de poche (12a) dans un élément de batterie (10) selon la revendication 1, **caractérisé en ce que**
la partie de pliage (120) est fournie de façon à ce que la seconde surface de contact (122) soit inclinée dans une plage de 55 degrés à 85 degrés par rapport à la première surface de contact (121).

7. Dispositif (100) pour plier une aile de poche (12a) dans un élément de batterie (10) selon la revendication 1, **caractérisé en ce que**
la paire de lames chauffantes (131, 132) comprend une première lame chauffante (132) en contact avec la première surface (12f) de l'aile de poche (12a) et une seconde lame chauffante (131) en contact avec une seconde surface (12g) dans la direction opposée à la première surface (12f) de l'aile de poche (12a), et
la partie de pliage (120) est fournie de façon à ce que lors de la deuxième mise sous pression, la seconde surface de contact (12g) se déplace vers la seconde lame chauffante (131), et l'aile de poche (12a) entre en contact avec la seconde lame chauffante (131) et la seconde surface de contact (122), respectivement.

8. Dispositif (100) pour plier une aile de poche (12a) dans un élément de batterie (10) selon la revendication 7, **caractérisé en ce que**
les première et seconde lames chauffantes (131, 132) comprennent chacune un corps principal (131b, 132b) en contact avec l'aile de poche (12a) et une source de chaleur (131a, 132a) pour fournir de la chaleur au corps principal (131b, 132b), et
la seconde lame chauffante (131) est courbée dans une direction où l'extrémité de contact du corps principal (1321) en contact avec l'aile de poche (12a) fait face à la partie de pliage (120).

9. Dispositif (100) pour plier une aile de poche (12a) dans un élément de batterie (10) selon la revendication 8, **caractérisé en ce que**
la seconde lame chauffante (131) est courbée de façon à ce qu'un côté de l'extrémité de contact (131c) soit parallèle à la seconde surface de contact (122) de la partie de pliage (120).

10. Dispositif (100) pour plier une aile de poche (12a) dans un élément de batterie (10) selon la revendication 9, **caractérisé en ce que**
après que la deuxième mise sous pression de la partie de pliage (120) a été terminée, la seconde lame chauffante (131) est fournie de façon à ce qu'elle soit déplacée dans une direction s'éloignant de l'aile de poche (12a), et un côté de l'extrémité de contact (131c) de la seconde lame chauffante (131) met sous pression une troisième fois l'aile de poche.

11. Dispositif (100) pour plier une aile de poche (12a) dans un élément de batterie (10) selon la revendication 10, **caractérisé en ce que**
après que la deuxième mise sous pression de la partie de pliage (120) a été terminée, la seconde lame chauffante (131) est déplacée dans la direction opposée à la direction dans laquelle elle se déplace pour entrer en contact avec l'aile de poche (12a).

12. Dispositif (100) pour plier une aile de poche (12a) dans un élément de batterie (10) selon la revendication 10, **caractérisé en ce que**
alors que la seconde lame chauffante (131) est déplacée dans une direction s'éloignant de l'aile de poche (12a), et met sous pression l'aile de poche (12a) dans la direction opposée à la seconde direction, l'aile de poche (12a) est pliée une troisième fois.
